# EUROPEAN PATENT SPECIFICATION

(11) **EP 1 363 052 B1**
(45) Date of publication and mention of the grant of the patent: **24.08.2005**
(21) Application number: 02425312.2
(22) Date of filing: 17.05.2002
(51) Int. Cl.: F16K 1/30

(54) **Fast-flow discharge valve for a high-pressure inert gas fire extinguisher system**
Schnellströmendes Abgabeventil für eine Hochdruckinertgasfeuerlöscheinrichtung
Soupape de décharge à écoulement rapide pour un dispositif d'extinction de gaz inerte à haute pression

(43) Date of publication of application: 19.11.2003
(73) Proprietor: VESTA SRL, (Milano) (IT)
(72) Inventor: Bianchi, Giancarlo, 20020 Barbaiana di Lainate (Milano) (IT)
(74) Representative: Petruzziello, Aldo

(56) References cited:
- EP-A- 0 666 087
- US-A- 3 292 895
- US-A- 4 402 340
- US-A- 5 007 614
- US-A- 5 566 713
- US-A- 5 899 275

## Description

The present invention refers to a fast-flow discharge valve for an inert gas fire extinguisher system.

Inert gas fire extinguisher systems use 40, 60, 80 and 140 litre tanks charged with inert gases such as argon, nitrogen or mixtures of argon and nitrogen at high pressures of 200 or 300 bar. Discharge valves of the prior art generally have a single opening that serves both for charging and recharging of the extinguishing gas into the tank, and for discharge.

When the tank needs to be recharged, it is necessary to remove the discharge hose from the valve to disconnect the tank from the system and convey it to the recharging point. Consequently recharging operations for fire extinguishing systems present operating difficulties, due to the excessive weight and poor manageability of the tanks, which are often situated in cramped rooms with difficult access.

It is certainly convenient and safe for the operators to charge any empty tanks on the spot, without the need to remove the discharge valves. This drawback is overcome by discharge valves according to the prior art which have two separate mouths: one for charging the extinguishing gas and the other for discharge.

However, these valves present some disadvantages.
In fact they have a certain structural complexity due to additional operations of mechanical working to provide passages inside the valve body that place the extinguishing gas containing chamber in communication with the operating chamber of the obturator piston of the valve.

Furthermore, valves according to the prior art are generally operated by a solenoid valve actuator which opens the valve when fire hazard situations are encountered. Said solenoid actuator cannot be tested.

In fact, to test operation of the solenoid valve actuator in valves according to the prior art, complete discharge of the gas present in the first tank and consequently in the other tanks connected in cascade to the first tank must be carried out, with a consequent excessive waste of extinguishing gas.

Furthermore, valves are often provided with a pressure gauge and/or manostat to check the state of charging of the tank. Valves according to the prior art do not allow these components to be replaced in the event of faults with the tank charged without causing the loss of the extinguishing gas, since the removal of said components frees a hole that is in direct communication with the inside of said tank. Furthermore, for the same reason, according to the prior art it is not possible to apply the pressure gauge and/or the manostat after the tank has already been charged.

EP 0 666 087 describes a fast-flow discharge valve for a high-pressure gas fire estinguishing system according to the preamble of claim 1.

The object of the present invention is to eliminate the drawbacks of the prior art, providing a rapid-flow discharge valve for an inert-gas fire extinguisher system that allows recharging of the gas directly in the place of installation of the fire extinguisher system without disconnecting the tanks from the system and in conditions of the utmost safety.

Another object of the present invention is to provide such a discharge valve that is able to test the solenoid valve actuators without the need to waste all the gas contained in the tanks of the fire extinguisher system.

Another object of the present invention is to provide such a discharge valve that allows installation and/or replacement of the manostat and the pressure gauge, as well as installation and control of operation of the solenoid of the solenoid valve, with the tank charged, without loss of the extinguishing gas.

Yet another object of the present invention is to provide such a discharge valve with the prerogatives stated above, that is economical and simple to make.

These objects are achieved according to the invention with the characteristics listed in appended independent claim 1.

Advantageous embodiments of the invention are apparent from the dependent claims.

The fast-flow discharge valve according to the invention comprises a body with an axial passage, communicating with the inside of the tank, which defines a lower chamber within which an obturator can move axially to obstruct/allow the flow of extinguishing fluid towards a radial discharge passage.

The peculiarity of the invention lies in the fact that the discharge valve comprises a service valve provided with an obturator able to open/close the communication between the lower chamber and a service passage connected to at least one outlet to receive at least one actuating device or control device of the valve.

The discharge valve further comprises a recharging valve provided with an obturator able to open/close the communication between the lower chamber and a recharging passage formed in the valve body and designed to be connected to a hose for input of the extinguishing fluid recharge into the tank.

The service valve is opened/closed by means of a handwheel operated by the user to carry out the operations of installation/replacement of the control accessories and the solenoid valve testing operations. The recharging valve too is opened/closed by means of a handwheel operated by the user to perform recharging operations.

The valve according to the invention has a passage which puts the lower chamber in which the extinguishing gas is contained into communication with an outlet sealed by a breakable disc. An actuator able to break the disc to take gas directly from the tank for actuation of said valve and/or of any other valves connected in cascade is fitted to said outlet.

The advantages of the discharge valve according to the invention are evident.

In fact, for recharging of a fire extinguishing system consisting of a battery of tanks connected in cascade, it is sufficient to operate the handwheel of the refill valves of the system and thus, through the recharge inlet of the first valve, charge the entire system, without the need to remove the valves and take the tanks away.

Further, by closing the service valve of the discharge valve according to the invention, the solenoid valve can be tested and the operations for replacement of the control accessories can be performed without losing the extinguishing gas contained in the tanks and without disconnecting the actuator from the valve.

Further characteristics of the invention will be made clearer by the detailed description that follows, referring to a purely exemplary and therefore non limiting embodiment thereof, illustrated in the appended drawings, wherein:
Figure 1 is an axial sectional view of the discharge valve according to the invention, shown in the closed condition and fitted to the mouth of an extinguishing gas tank, shown broken off, wherein the piston stem of the valve and the manostat of the valve are not shown in section;
Figure 1A is a view like Figure 1, partially in axial section, wherein the valve is in the open condition of discharge of the extinguishing gas;
Figure 2 is a cross sectional view along the sectional plane II-II of Figure 1, wherein the solenoid valve and the manostat are not shown in section;
Figure 3 is a cross sectional view along the sectional plane III-III of Figure 1;
Figure 4 is an axial sectional view along the sectional plane IV-IV of Figure 1, wherein the pressure gauge of the valve is not shown in section and wherein the acutating solenoid valve has been omitted;
Fig. 4A is a view like Fig. 4, partially in axial section, illustrating the valve in the open position of discharge;
Figure 5 is a diagrammatic view illustrating an example of connection of a plurality of valves, for operation in cascade;
Figure 6 is a diagrammatic view illustrating an example of connection of a plurality of valves for in situ recharging of extinguishing fluid.

The discharge valve according to the invention, designated as a whole with reference numeral 1, is described with the aid of the figures.

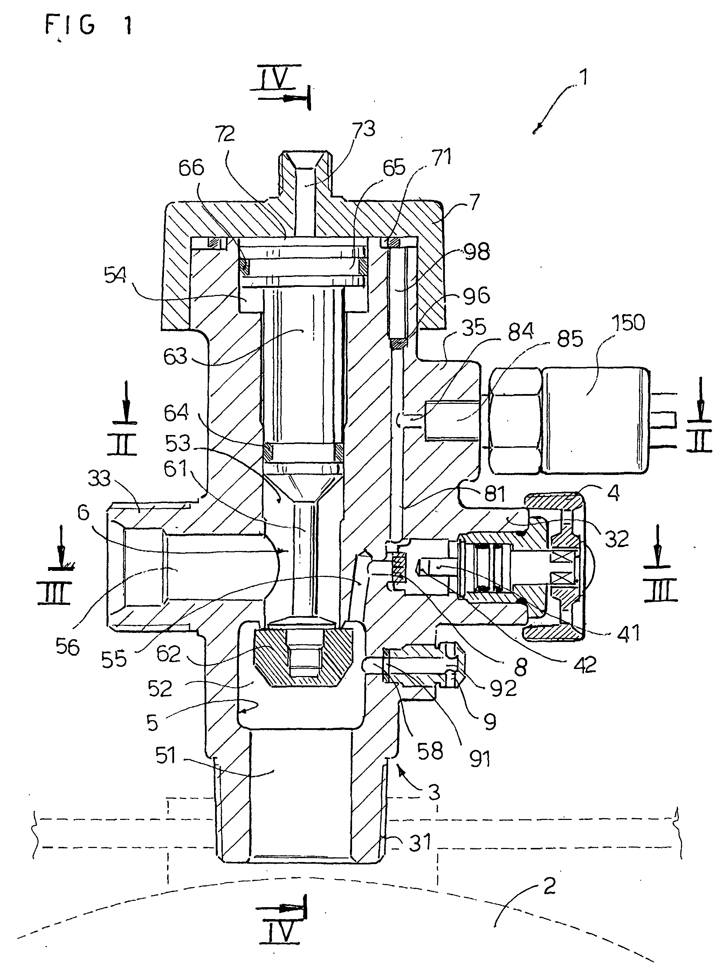

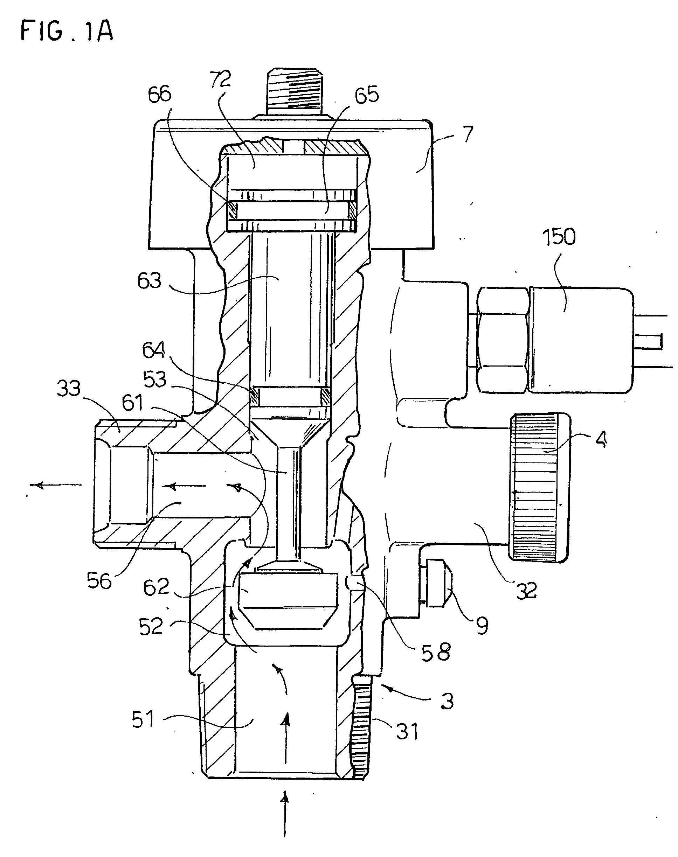

Figure 1 shows the mouth of a tank 2 suited to contain extinguishing gas, to which the valve 1 is applied. For this purpose, the valve 1 comprises a body 3 the lower part of which has an outwardly threaded connector 31 which engages in the inside thread of the mouth of the tank 2.

An axial passage 5 that extends from the bottom end to the top end of the valve 1 is formed within the body 3. The axial passage 5 has a first lower portion of passage 51 in communication with the inside of the tank 2. In the axial passage 5, above the lower passage 51, a lower chamber 52 which communicates with a central chamber 53 is defined. The central chamber 53 extends for a good part of the valve body 3 and then widens, at the top of the valve, so as to form an upper chamber 54.

A piston, designated as a whole with reference numeral 6, is mounted axially slidably in the axial passage 5. The piston 6 comprises a stem 61 disposed axially in the central chamber 53. A plunger 62 which acts as an obturator is mounted in the lower part of the stem 61 and is disposed in the lower chamber 52. The plunger 62 has a larger diameter than that of the stem 61, so as to be able to abut against the annular surface that delimits the lower chamber 52 from the central chamber 53, to prevent the passage of fluid from the lower chamber 52 to the central chamber 53.

At the top, the stem 61 has a tapered part ending in a part with a greater diameter 63 having a diameter equal to or slightly smaller than that of the central passage 53. An O-ring 64 has been housed on the part with the largest diameter 63 to allow the piston 6 to slide axially sealingly in the central chamber 53 of the valve.

The part of the stem with the larger diameter 63 ends with a cylindrical flange 65 of the piston disposed in the upper chamber 54 of the valve body. The flange 65 has a diameter equal to or slightly smaller than the diameter of the upper chamber 54 and has an annular peripheral seat on which an O-ring 66 is housed to be able to slide sealingly inside the upper chamber 54.

A cover 7 is mounted on top of the valve 3. The cover 7 has an inside thread that engages with an outside thread provided in the head of the valve body. A sealing gasket 71 is provided between the cover and the valve body.

Above the flange 65 of the piston, the cover 7 defines a second upper chamber 72. An axial pressurization passage 73 communicating with the upper chamber 72 of the cover and open towards the outside is defined in the cover 7. Said axial passage 73 of the cover serves for the entry of the gas used to pressurise the upper chamber 72 of the cover, so as to actuate the piston 6 of the valve, pushing it downward.

The lower chamber 52 communicates with an oblique service passage 55 which extends laterally and obliquely with respect to the central chamber 53. The service passage 55 opens into a service valve 8 which communicates with a vertical service passage 81, parallel to the central chamber 53.

In proximity to the service valve 8, the body 3 has a connector 32 of the service valve that protrudes radially therefrom. A handwheel 4 of the service valve operable by the user is mounted in the connector 32. The service handwheel 4 has a stem 41 the end 42 of which acts as an obturator for the service valve 8. In fact, when the end 42 of the stem of the handwheel 4 engages in the service valve 8, the flow of fluid from the oblique service passage 55 to the vertical service passage 81 is interrupted. The upper part of the vertical service passage 81 is closed with a gasket 96 urged by a screw 98.

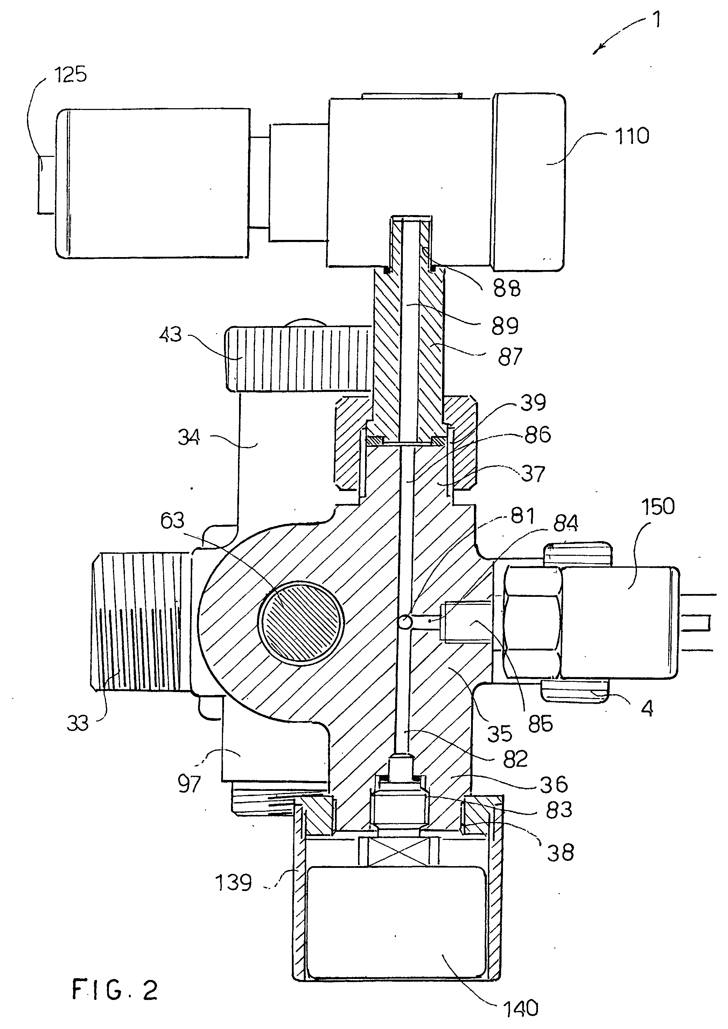

As shown in Figure 2, the vertical service passage 81 communicates with three transverse service passages 82, 84 and 86 disposed in a T. The first transverse service passage 82 widens into a connector 83 with an inside thread for housing of a pressure gauge 140. Said passage 82 is formed on the inside of a connector 36 protruding radially from the valve body 3, whereon a thread 38 is formed outwardly to receive a ring nut 139 protecting the pressure gauge 140. The pressure gauge 140 is therefore in communication with the gas present in the tank 2, through the vertical service passage 81 and the first transverse service passage 82, and can measure the pressure of the gas inside the tank.

The second transverse service passage 84 widens into a chamber 85 having an inside thread for housing of a manostat 150. Thus, the manostat 150 also is in direct connection with the gas present in the tank 2.

The third transverse service passage 86 is formed in a connector 37 that protrudes radially from the valve body 3, in a position diametrically opposite to the connector 36 of the ring nut of the pressure gauge 140. An outside thread 39 has been formed on this connector 37 for housing of a revolving steel connector 87.

Said revolving connector 87 has a threaded male connector 88 for connection of a solenoid valve 110. A through passage 89 in contact with the third transverse service passage 86 is formed inside the revolving connector 87. The solenoid valve 110 is a solenoid actuator and comprises an outlet 125 which opens according to a control signal sent by a control unit that has received an alarm signal from a sensor which can be, for example, a smoke or flame sensor.

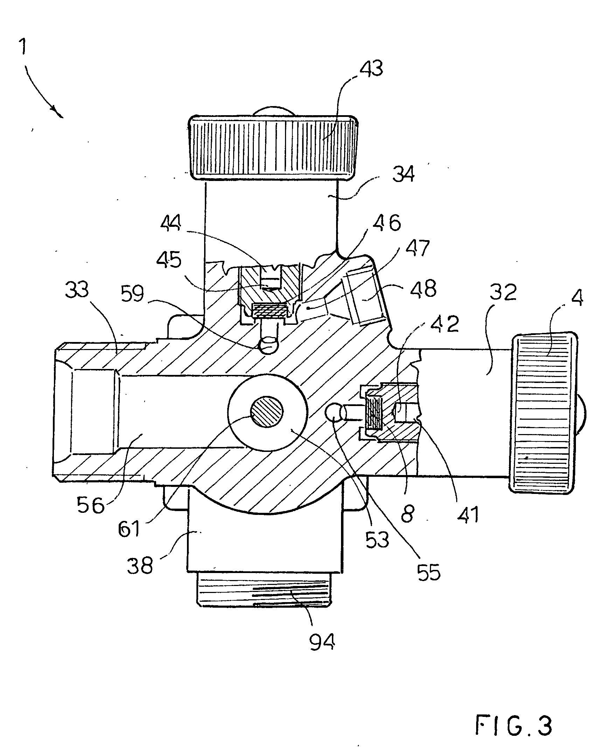

As shown in Figures 1 and 3, the body 3 has a discharge connector 33 protruding radially therefrom in a diametrically opposite position to the connector 32 of the service valve. The discharge connector 33 has an outside threading to be able to receive a hose for delivery of extinguishing gases. Inside the connector 33 is a radial discharge passage 56 communicating with the central axial chamber 53. The radial passage 56 serves for discharge of the extinguishing gas.

As shown in Figure 1, a female connector is provided beneath the connector 32 of the service handwheel 4 to receive the safety device 9. The safety device 9 has a breakable disc 91 disposed at the end of a passage 92 formed inside the safety device 9 and communicating with the outside.

A radial safety passage 58 communicating with the lower chamber 52 of the valve body and ending in the breakable disc 91 of the safety device 9 is provided in the valve body 3, beneath the oblique service passage 55. In this manner the breakable disk 91 separates the safety passage 58 of the valve body from the passage 92 of the safety device which opens outwardly. The breakable disc 91 breaks if the pressure of the extinguishing fluid present in the tank 2 exceeds a certain value, allowing the gas to flow out to the outside of the valve 1.

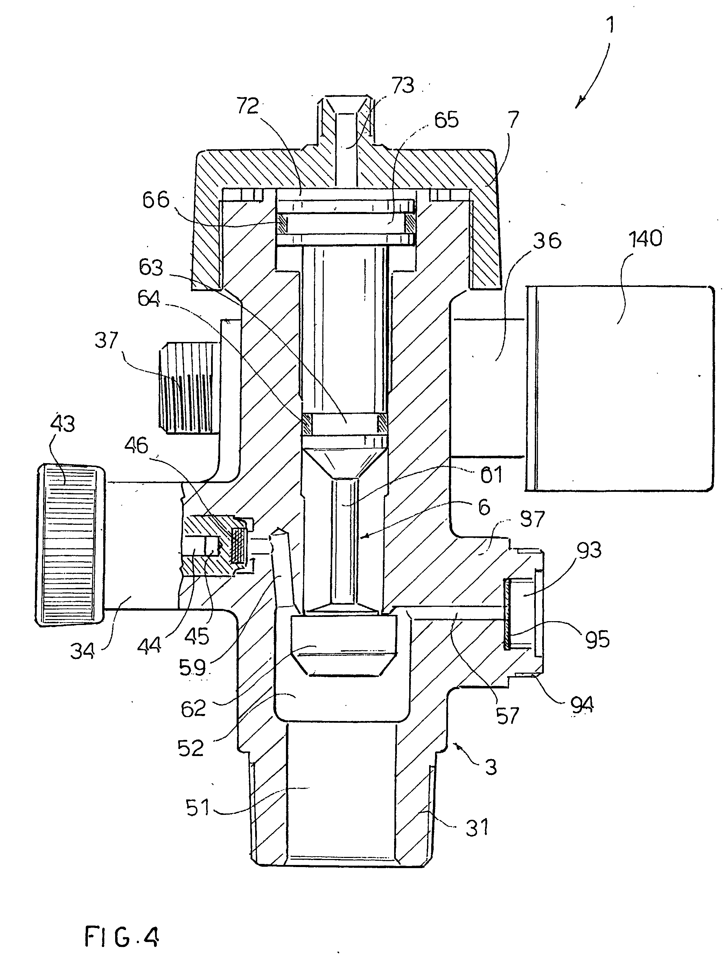

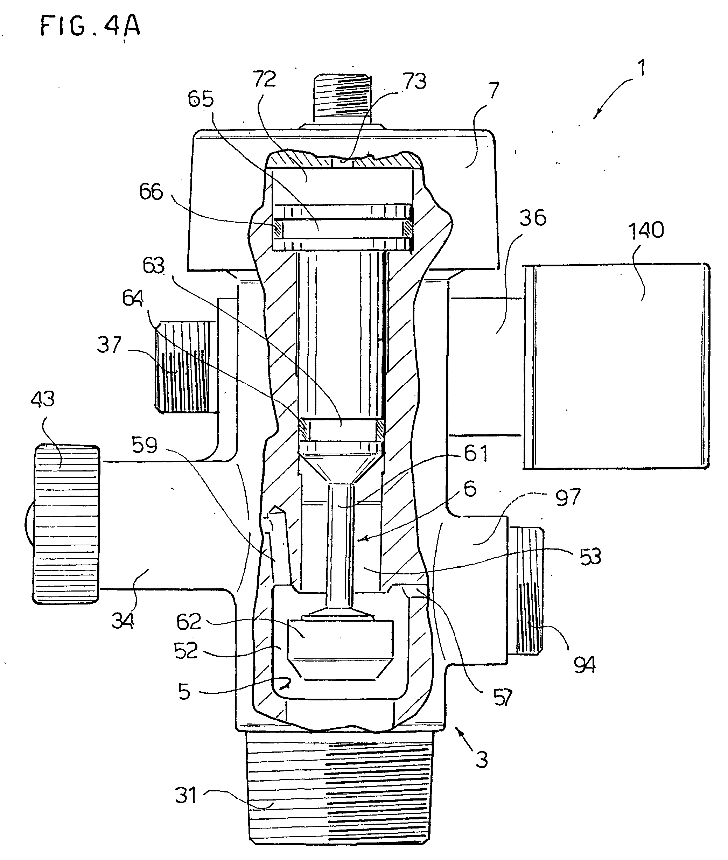

As shown in Figure 4, the lower chamber 52 of the valve body communicates with a radial actuating duct 57. Said radial actuating passage 57 ends with a breakable disk 95 that separates the radial actuating passage 57 from an actuating chamber 93 for housing of a pneumatic and/or manual actuator, not shown in Figure 4. The pneumatic actuator is fixed through a thread 94 made in a connector 97 protruding radially from the valve body 3. Breakage of the breakable disc 95, by means of a pneumatic and/or manual actuator, allows the gas to flow out from inside the tank 2, through the lower chamber 52, the actuating passage 57 and the actuating chamber 93. The gas is recovered from the actuating chamber 93 through opening of the valve 1 and/or of other valves connected in cascade to the valve 1.

As shown in Figures 4 and 3, the lower chamber 52 communicates with another service passage 59 which extends in the body 3 laterally and obliquely to the central chamber 53. The service passage 59 opens into a recharging valve 46. The recharging valve 46 communicates with a transverse charging passage 47 which ends in a female connector 48 with an inside threading, communicating with the outside to receive an extinguishing gas charging hose. The transverse charging passage 47 serves for in situ charging of the tanks of the system.

In proximity to the recharging valve 46, the body 3 has a connector 34 which protrudes radially therefrom. A handwheel 43 operable by the user is mounted on said connector 34. The handwheel moves a stem 44 the end 45 of which acts as an obturator for the recharge valve 46. When the end 45 of the stem of the handwheel 43 engages in the recharge valve 46, the flow of fluid from the service passage 59 to the transverse recharge passage 47 is interrupted.

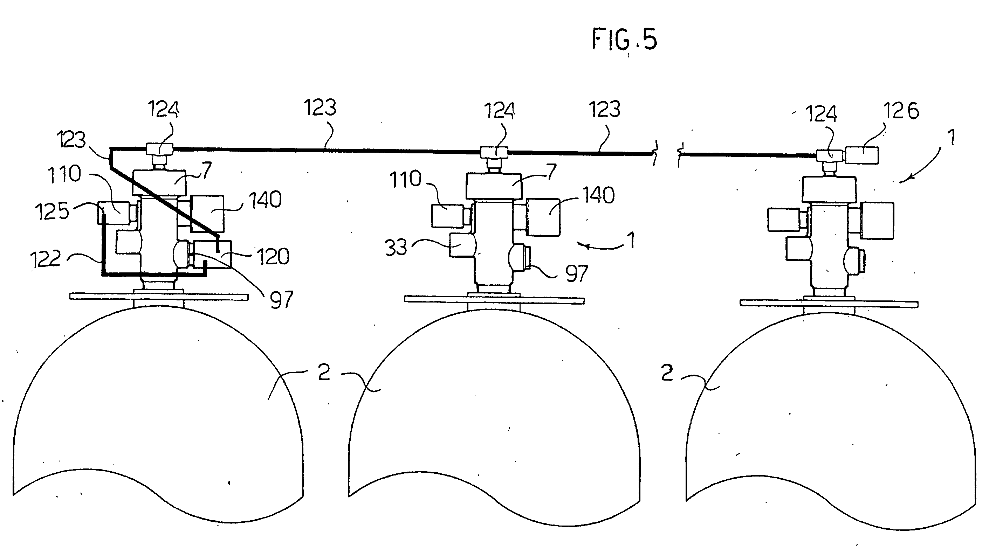

The valve 1 is destined to cooperate with other similar valves disposed in cascade in a battery of tanks 2 of a fire extinguishing system. The connection of the valves 1 is shown in Figure 5, wherein one of the valves (the first on the right, with reference to Figure 5) acts as a pilot valve, whilst the others act as piloted valves.

The outlet 125 of the solenoid valve 110 of the pilot valve 1 is connected, through a hose 122, to a pneumatic actuator 120 connected to the relative connector 97 of the valve body. The pneumatic actuator 120, through a second hose 123, is connected to the inlet of an actuator connector 124 disposed at the top of the cover 7 of the pilot valve 1. The actuating connector 124 can be, for example, a T connector having an inlet and two outlets, wherein one outlet is connected to an axial passage 73 (Figure 1) of the cover 7 and the other outlet is connected, by means of a hose 123, to the inlet of another T connector placed at the top of the cover of another valve, and so on, so as to connect all the valves of the battery in cascade.

Clearly the connector 124 of the last valve has a closing stopper 126 or alternatively the axial passage 73 of the cover of the last valve can be connected directly to the hose 123, or an L-connector can be provided.

In this manner, when the solenoid valve 110 opens, in accordance with a control signal, the gas passes from the inside of the relative tank 2, though the relative service passages and through the solenoid valve 110 and is sent be means of the hose 122 to the pneumatic actuator 120. Consequently, opening of the solenoid valve 110 actuates the pneumatic actuator 120 which breaks the breakable disc 95, putting the chamber 93 in which the pneumatic actuator 120 is housed into communication with the gas contained in the tank 2. The gas taken from the tank 2 is thus sent through the hose 123 into the top connector 124 of the pilot valve and in cascade to all the other valves connected to the pilot valve. Thus the valves 1 are opened and the gas is delivered by the relative discharge nozzles of the valves.

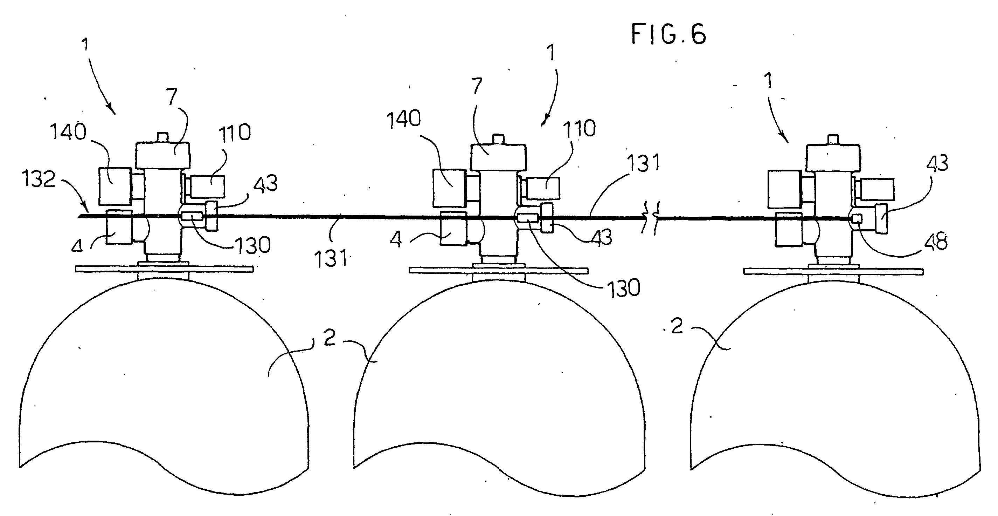

As shown in Figure 6, the pilot valve 1 can be connected to other valves in cascade for in situ recharging. For this purpose a recharging T connector 130 having an inlet and two outlets is provided. One outlet of the T connector 130 is connected to the charging housing 48 (Figure 3) of the valve body. Returning to Figure 6, the inlet of the T connector 130 of the first valve 1 is connected, through a hose 132, to a recharging system (not shown) upstream of the first valve, while the other outlet of the T connector 130, opposite the inlet, is connected, by a hose 131, to the inlet of the T connector 130 of the second valve of the battery and so on, so as to connect all the valves of the battery in cascade.

Clearly the hose 131 is connected directly to the charging housing 48 of the last valve of the battery without the T connector 130, or alternatively an L connector or a closing stopper can be provided. Opening of the charging handwheels 43 of the various valves 1 allows the inlet of the relative T connectors 130 to be put in communication with the inside of the respective tanks 2, thus allowing recharging directly at the place of installation.

Operation of the valve 1 according to the invention will be described hereunder.

With reference to Figures 1, 2 and 4, the situation in which the valve is in the closed position is illustrated. The extinguishing fluid passes from the tank 2 through the lower passage 51 into the lower chamber 52 of the valve body exerting upward pressure on the obturator 62 of the piston 6. The upper chamber 72 above the flange 65 of the piston is not pressurized and thus the piston 6 is in its upper end-of-stroke position and the obturator abuts against the annular abutment surface of the body 3, beneath the central chamber 53, preventing the passage of extinguishing fluid from the lower chamber 52 to the central chamber 53.

In this situation, the fluid in the lower chamber 52 is under pressure and through the service passages 55 and 81 and the respective transverse service passages 82, 84 and 86 the gas under pressure is in connection with the pressure gauge 140, the manostat 150 and the solenoid valve 110, respectively. In this situation the service handwheel 4 is open and thus allows the gas to pass from the oblique service passage 55 to the vertical service passage 81. The pressure gauge 140 and the manostat 150 are therefore in communication with the fluid inside the tank, thus being able to measure the pressure thereof.

The gas under pressure in the lower chamber 52 of the valve body is in connection, through the passage 58, with the safety disc 91 and, through the passage 59, with the recharging valve 46 which, however, is kept closed by the small piston 45 operable by the recharging handwheel 43.

The operation for replacement/repair of the solenoid valve 110 and/or of the manostat 150 and/or of the pressure gauge 140 will now be described.

Acting on the service handwheel 4, the service valve 8 which separates the oblique passage 55 from the vertical passage 81 is closed. In this manner the vertical passage 81 is no longer in communication with the fluid contained inside the tank. Thus it is possible to disconnect both the pressure gauge 140, the manostat 150 and the solenoid valve 110, without discharging the fluid contained in the tank, but losing only the gas trapped in the vertical passage 81.

The situation of discharge of the gas will now be described.

When a fire hazard condition is detected, a control signal is sent to the actuator 110 which opens the outlet 125. With reference to Figure 5, the gas under pressure passes through the hose 122 and reaches the pneumatic actuator 120 which breaks the breakable disc 95 (Figure 4). Once the disc 95 is broken, the gas contained in the tank 2 can flow out though the housing 93 of the pneumatic actuator 120 and is sent through the hose 123 to the head connectors 124 of the valves connected in cascade. The gas is then introduced through the axial passage 73 of the cover 7 of each valve into the upper chamber 72 above the flange 65 of the valve piston.

As a result, as shown in Figures 1A and 4A, the second upper chamber 72 is pressurised. Because of the pressurisation of the second upper chamber 72, the flange 65 of the piston is pushed downward, until it abuts against the annular abutment surface which delimits the first upper chamber 54 from the central chamber 53 of the valve body. In this situation the plunger 62 is lowered into the lower chamber 52 and allows the passage of the extinguishing fluid from the lower chamber 52 to the central chamber 53.

The extinguishing fluid flows from the central chamber into the radial discharge passage 56 to which a discharge hose is connected. When there are a plurality of valves connected in cascade, as illustrated in Figure 5, one of the valves acts as a pilot and through the hose 123 sends the gas taken from the pneumatic actuator 120 to the head of all the valves connected in cascade. The gas of the tank of the pilot valve therefore ensures the pressure in all the upper chambers 72, thus keeping the respective pistons 6 lowered.

Operation of recharging the tanks 2 will now be described.

The valves 1 must be connected to one another in cascade through the recharging apertures 48 as shown in Figure 6. Said connection in cascade can be carried out either before recharging or can be prepared during installation of the system. In the latter case, since connection is carried out with the tanks full, the connection must be made after having closed the recharging valve 46 of all the valves 1 by operating the handwheel 43 to close the passage of the gas from the inside of the tank towards the recharging passage 48.

To perform charging, the hose 132 of the extinguishing fluid supply system is connected to the free entry of the T connector 130 inserted in the recharging passage 48 of the first valve. The recharging handwheels 43 are operated to open the service valves 46 of all the valves 1, thus putting the charging passage 48 in connection with the inside of the tanks 2. The extinguishing fluid goes from the charging passage 48, though the service passage 59 into the lower chamber 52, into the lower passage 51 of the valve body and into the tank 2.

Since the inlets 48 are connected to one another through the tubes 131, all tanks of the battery are charged at the same time. Once the recharging operation has been completed the recharging valves 46 are shut by means of the handwheel 43, the hose 132 of the supply system is removed from the inlet of the T connector 130 of the first valve and a closing stopper is placed in said inlet.

A test operation on the solenoid valve 110 will now be described.

When correct operation of the solenoid valve 110 is to be checked, the service valve 8 is closed by acting on the handwheel 4. With this operation communication is cut off between the vertical passage 81 and the oblique passage 55 which is in communication, through the lower chamber 52, with the fluid inside the tank 2. At this point a fire situation can be simulated by sending a control signal to the actuator of the solenoid 110 so as to open the outlet 125 of the solenoid valve wherefrom only a minimal amount of fluid will be discharged, that is only the amount of fluid contained in the service passages 81 and 86, thus without causing emptying of the tank 2.

Numerous changes and modifications of detail within the reach of a person skilled in the art can be made to the present embodiment of the invention, without thereby departing from the scope of the invention expressed by the appended claims.

## Claims

1. A fast-flow discharge valve (1) for a high-pressure inert gas fire extinguishing system comprising:
- a valve body (3) ending at the bottom in a threaded connector (31) suitable to be applied to the mouth of a tank (2) for containing fire extinguishing inert gas;
- a passage (5) disposed axially inside said valve body (3) comprising a lower chamber (52) and a first upper chamber (54) communicating through a central chamber (53) with a smaller diameter;
- a piston (6) slidable axially in said axial passage (5) comprising a stem (61) with a central part (63) sealingly slidable in said central chamber (53), a bottom part connected to an obturator (62) disposed in said lower chamber (52) to allow/impede the flow of fluid from said lower chamber (52) to said central chamber (53), an upper part connected to a circular flange (65) sealingly slidable in said first upper chamber (54); and
- a discharge connector (33) protruding from the body (3) able to receive a discharge hose, a discharge passage (56) communicating with said central chamber (53) being provided inside said discharge connector (33);
**characterised in that** said discharge valve (1) further comprises
- a service valve (8) provided with an obturator (42) suitable to open/close the communication between said lower chamber (52) and at least one service passage (81) formed in the valve body and provided with at least one outlet (86, 84, 82) designed to be connected to at least one actuating or control device (110, 150, 140) of the valve; and
- a recharging valve (46) provided with an obturator (45) able to open/close the communication between said lower chamber (52) and a recharging passage (48) formed in the valve body and designed to be connected to a hose for introduction of the recharging extinguishing fluid.

2. A discharge valve according to claim 1, **characterised in that** said obturator (42) of the service valve and said obturator (45) of the recharging valve are disposed on respective stems (41, 44) of respective manually operable handwheels (4, 43).

3. A discharge valve according to claim 1 or 2, **characterised in that** three service passages (86, 84, 82) connected respectively to a solenoid valve (110), a manostat (150) and a pressure gauge (140) are provided in the valve body (3).

4. A discharge valve according to claim 3, **characterised in that** said service valve (8) is disposed between a first service passage (55) communicating with the lower chamber (52) and substantially oblique with respect to the central chamber (53) and a second service passage (81) substantially parallel to the central chamber (53), said second service passage (81) being connected to said three service passages (86, 84, 82) which are disposed transversally in the valve body in a substantially T-shaped configuration.

5. A discharge valve according to claim 4, **characterised in that** a first transverse service passage (82) communicates with an outlet (83) for housing of a pressure gauge (140), a second transverse service passage (84) communicates with an outlet (85) for housing of a manostat (150) and a third transverse service passage (86) can be connected to a revolving connector (87) with an inner passage (89) communicating with an outlet for housing of a solenoid valve (110).

6. A valve according to any one of the preceding claims, **characterised in that** it comprises a cover (7) disposed on top of the valve body (3) so as to delimit a second upper chamber (72) between the inside surface of the cover and the upper surface of said flange (65) of the piston, a pressurization passage (73) communicating with the outside for the entry of the pressurization fluid of said second upper chamber (72) to operate said piston (6) being provided in said cover (7).

7. A valve according to any one of the preceding claims, **characterised in that** said recharging valve (46) comprises two outlets communicating with two substantially transverse passages (47, 48) communicating with the outside, one of which is a passage for entry of the recharging fluid of the fire extinguishing system and the other is an outlet passage for the fluid of the fire extinguishing system.

8. A valve according to any one of the preceding claims, **characterised in that** communicating with said lower chamber (52) there is provided a radial passage (57) that leads to a breakable disc (95) disposed in a housing (93) of the valve body (3) able to receive a pneumatic or manual actuator (120) designed to be connected to a solenoid valve (110) and provided with breaking means to break said breakable disc (95).

9. A valve according to any one of the preceding claims, **characterised in that** communicating with said lower chamber (52) there is provided a radial passage (58) connected to a safety device (9) that allows the fluid under pressure to flow out from the lower chamber (52) when the pressure of the fluid in said lower chamber (52) exceeds a predetermined pressure value.

10. A valve according to claim 9, **characterised in that** said safety device (9) comprises a breakable disk (91) which separates said first radial passage (58) from a passage (92) communicating with the outside, said breakable disk breaking when the pressure of the fluid in the first radial passage (58) exceeds said predetermined threshold value.

## Patentansprüche

1. Ein Schnellfluss-Ablassventil (1) für eine Hochdruck-Feuerlöschanlage mit Edelgas, die folgendes umfasst:
- einen Ventilkörper (3), der unten in einem Gewindeverbinder (31) endet, welcher geeignet ist, an der Mündung eines Behälters (2) angebracht zu werden, der das feuerlöschende Edelgas enthält;
- eine Leitung (5), die axial innen in dem genannten Ventilkörper (3) angeordnet ist, welcher eine untere Kammer (52) und eine erste obere Kammer (54) umfasst, die über eine mittlere Kammer (53) mit geringerem Durchmesser miteinander in Verbindung stehen;
- ein Kolben (6), der sich axial gleitbar in der genannten axialen Leitung (5) befindet, welcher einen Schaft (61) mit einem mittleren Teil (63) umfasst, der sich dicht gleitbar in der genannten mittleren Kammer (53) befindet, einen unteren Teil, der mit einem Schieber (62) verbunden ist, welcher in der genannten unteren Kammer (52) angeordnet ist, um den Durchfluss von Fluiden von der genannten unteren Kammer (52) zu der genannten mittleren Kammer (53) zu gestatten/zu verhindern, einen oberen Teil, der mit einem runden Flansch (65) verbunden ist, der sich dicht gleitbar in der genannten ersten oberen Kammer (54) befindet, und
- einen Ablassverbinder (33), der vom Körper (3) vorsteht und in der Lage ist, einen Ablassschlauch aufzunehmen, eine Ablassleitung (56), die in Verbindung mit der genannten mittleren Kammer (53) steht, welche innen in dem genannten Ablassverbinder (33) vorgesehen ist;
**dadurch gekennzeichnet, dass** das genannte Ablassventil (1) des weiteren folgendes umfasst:
- ein Betriebsventil (8), das mit einem Schieber (42) ausgestattet ist, der geeignet ist, die Verbindung zwischen der genannten unteren Kammer (52) und mindestens einer Betriebsleitung (81) zu öffnen/schließen, die sich im Ventilkörper befindet und mit mindestens einem Ausgang (86, 84, 82) versehen ist, der dazu bestimmt ist, mit mindestens einer Antriebs- oder Steuervorrichtung (110, 150, 140) des Ventils verbunden zu werden, und
- ein Nachladeventil (46), das mit einem Schieber (45) ausgestattet ist, der die Verbindung zwischen der genannten unteren Kammer (52) und einer Nachladeleitung (48) öffnen/schließen kann, welche sich in dem Ventilkörper befindet und dazu bestimmt ist, mit einem Schlauch zum Einlassen des Nachladungs-Feuerlöschfluids verbunden zu werden.

2. Ein Ablassventil gemäß Anspruch 1, **dadurch gekennzeichnet, dass** der genannte Schieber (42) des Betriebsventils und der genannte Schieber (45) des Nachladeventils jeweils an entsprechenden Schäften (41, 44) von entsprechenden, von Hand zu betätigenden Stellrädern (4, 43) angeordnet sind.

3. Ein Ablassventil gemäß Anspruch 1 oder 2, **dadurch gekennzeichnet, dass** drei Betriebsleitungen (86, 84, 82) die jeweils mit einem Magnetventil (110), einem Druckmesser (150) und einem Manometer (140) verbunden sind, im Ventilkörper vorgesehen sind.

4. Ein Ablassventil gemäß Anspruch 3, **dadurch gekennzeichnet, dass** das genannte Betriebsventil (8) zwischen einer ersten Betriebsleitung (55), die mit der unteren Kammer (52) in Verbindung steht und im wesentlichen schräg im Verhältnis zur mittleren Kammer (53) verläuft, und einer zweiten Betriebsleitung (81) angeordnet ist, die im wesentlichen parallel zu der mittleren Kammer (53) verläuft, wobei die genannte zweite Betriebsleitung (81) mit den genannten drei Betriebsleitungen (86, 84, 82), die quer in einer im wesentlichen T-förmigen Konfiguration im Ventilkörper angeordnet sind, verbunden ist.

5. Ein Ablassventil gemäß Anspruch 4, **dadurch gekennzeichnet, dass** eine erste quer verlaufende Betriebsleitung (82) mit einem Ausgang (83) zur Unterbringung eines Druckmessers (140) in Verbindung steht, eine zweite quer verlaufende Betriebsleitung (84) mit einem Ausgang (85) zur Unterbringung eines Manometers (150) in Verbindung steht, und eine dritte quer verlaufende Betriebsleitung (86) mit einem drehbaren Verbinder (87) mit einer inneren Leitung (89) verbunden werden kann, die mit einem Ausgang zur Unterbringung eines Magnetventils (110) in Verbindung steht.

6. Ein Ventil gemäß einem beliebigen der vorausgegangenen Ansprüche, **dadurch gekennzeichnet, dass** es einen Deckel (7) umfasst, der oben auf dem Ventilkörper (3) angeordnet ist, um eine zweite obere Kammer (72) zwischen der Innenfläche des Deckels und der oberen Fläche des genannten Flanschs (65) des Kolbens zu begrenzen, wobei eine Überdruckleitung (73) mit der Außenseite in Verbindung steht, und zwar zum Einlassen des Überdruckfluids der genannten zweiten oberen Kammer (72), um den genannten Kolben (6) zu betätigen, der in dem genannten Deckel (7) vorgesehen ist.

7. Ein Ventil gemäß einem beliebigen der vorausgegangenen Ansprüche, **dadurch gekennzeichnet, dass** das genannte Nachladeventil (46) zwei Ausgänge umfasst, die mit zwei im wesentlichen quer verlaufenden Leitungen (47, 48) in Verbindung stehen, welche mit der Außenseite verbunden sind, von denen eine eine Leitung zum Einlassen des Nachladefluids der Feuerlöschanlage ist, und die andere eine Ablassleitung des Fluids der Feuerlöschanlage ist.

8. Ein Ventil gemäß einem beliebigen der vorausgegangenen Ansprüche, **dadurch gekennzeichnet, dass** in Verbindung mit der genannten unteren Kammer (52) eine Radialleitung (57) vorgesehen ist, die zu einer brechbaren Scheibe (95) führt, welche in einem Gehäuse (93) des Ventilkörpers (3) angeordnet ist, das einen pneumatischen oder manuellen Antrieb (120) aufnehmen kann, der dazu bestimmt ist, mit einem Magnetventil (110) verbunden zu werden und der mit Brechelementen ausgerüstet ist, um die genannte brechbare Scheibe (95) zu brechen.

9. Ein Ventil gemäß einem beliebigen der vorausgegangenen Ansprüche, **dadurch gekennzeichnet, dass** in Verbindung mit der genannten unteren Kammer (52) eine Radialleitung (58) vorgesehen ist, die mit einer Sicherheitsvorrichtung (9) verbunden ist, die es dem unter Druck stehenden Fluid jeweils gestattet, aus der unteren Kammer (52) heraus zu fließen, wenn der Druck des Fluids in der genannten unteren Kammer (52) einen vorbestimmten Druckwert überschreitet.

10. Ein Ventil gemäß Anspruch 9, **dadurch gekennzeichnet, dass** die genannte Sicherheitsvorrichtung (9) eine brechbare Scheibe (91) umfasst, welche die genannte erste Radialleitung (58) von einer Leitung (92) trennt, die mit der Außenseite in Verbindung steht, wobei die genannte brechbare Scheibe bricht, wenn der Druck des Fluids in der ersten Radialleitung (58) den genannten vorbestimmten Schwellenwert überschreitet.

## Revendications

1. Vanne d'écoulement à flux rapide (1) pour un système d'extinction des feux à gaz inerte sous haute pression comprenant :
- un corps de la vanne (3) terminant à son fond en un connecteur fileté (31) prévu pour être appliqué sur la bouche d'un réservoir (2) pour contenir du gaz inerte pour l'extinction des feux ;
- un passage (5) placé dans le sens axial à l'intérieur dudit corps de la vanne (3) comprenant une chambre inférieure (52) et une première chambre supérieure (54) communiquant à travers une chambre centrale (53) au petit diamètre ;
- un piston (6) pouvant coulisser dans le sens axial dans ledit passage axial (5) comprenant une tige (61) avec une partie centrale (63) pouvant coulisser de façon scellée dans ladite chambre centrale (53), une partie de fond reliée à un obturateur (62) placé dans ladite chambre inférieure (52) pour permettre/empêcher l'écoulement du fluide de ladite chambre inférieure (52) à ladite chambre centrale (53), une partie supérieure reliée à une bride circulaire (65) pouvant coulisser de façon scellée dans ladite première chambre supérieure (54) ; et
- un connecteur d'écoulement (33) sortant en saillie du corps (3) en mesure de recevoir un tuyau d'écoulement, un passage d'écoulement (56) communiquant avec ladite chambre centrale (53) étant prévu à l'intérieur dudit connecteur d'écoulement (33) ;
**caractérisée en ce que** ladite vanne d'écoulement (1) comprend également
- une vanne de service (8) prévue avec un obturateur (42) en mesure d'ouvrir/de fermer la communication entre ladite chambre inférieure (52) et au moins un passage de service (81) réalisé dans le corps de la vanne et prévu avec au moins un orifice de sortie (86, 84, 82) conçu pour être relié à au moins un dispositif de commande ou d'actionnement (110, 150, 140) de la vanne ; et
- une vanne de recharge (46) prévue avec un obturateur (45) en mesure d'ouvrir/de fermer la communication entre ladite chambre inférieure (52) et un passage de recharge (48) réalisé dans le corps de la vanne et conçu pour être relié à un tuyau d'introduction du fluide d'extinction de recharge.

2. Vanne d'écoulement selon la revendication 1, **caractérisée en ce que** ledit obturateur (42) de la vanne de service et ledit obturateur (45) de la vanne de recharge sont placés sur des tiges respectives (41, 44) des volants actionnables manuellement (4, 43) respectifs.

3. Vanne d'écoulement selon la revendication 1 ou 2, **caractérisée en ce que** trois passages de service (86, 84, 82) reliés respectivement à une vanne solénoïde (110), un manostat (150) et un manomètre (140) sont prévus dans le corps de la vanne (3).

4. Vanne d'écoulement selon la revendication 3, **caractérisée en ce que** ladite vanne de service (8) est placée entre un premier passage de service (55) communiquant avec la chambre inférieure (52) et substantiellement oblique par rapport à la chambre centrale (53) et un deuxième passage de service (81) substantiellement parallèle à la chambre centrale (53), ledit deuxième passage de service (81) étant relié aux dits trois passages de service (86, 84, 82) qui sont placés transversalement dans le corps de la vanne dans une configuration substantiellement en forme de T.

5. Vanne d'écoulement selon la revendication 4, **caractérisée en ce qu'**un premier passage de service transversal (82) communique avec un orifice de sortie (83) pour accueillir un manomètre (140), un deuxième passage de service transversal (84) communique avec un orifice de sortie (85) pour accueillir un manostat (150) et un troisième passage de service transversal (86) peut être relié à un connecteur pivotant (87) avec un passage interne (89) communiquant avec un orifice de sortie pour accueillir une vanne solénoïde (110).

6. Vanne selon une revendication quelconque parmi les revendications susmentionnées, **caractérisée en ce qu'**elle comprend un couvercle (7) placé sur le haut du corps de la vanne (3) de façon à délimiter une deuxième chambre supérieure (72) entre la surface intérieure du couvercle et la surface supérieure de ladite bride (65) du piston, un passage de pressurisation (73) communiquant avec l'extérieur pour l'introduction du fluide de pressurisation de ladite deuxième chambre supérieure (72) pour actionner ledit piston (6) étant prévu dans ledit couvercle (7).

7. Vanne selon une revendication quelconque parmi les revendications susmentionnées, **caractérisée en ce que** ladite vanne de recharge (46) comprend deux orifices de sortie communiquant avec deux passages substantiellement transversaux (47, 48) communiquant avec l'extérieur, dont l'un est un passage pour l'introduction du fluide de recharge du système d'extinction des feux et l'autre est un passage de sortie pour le fluide du système d'extinction des feux.

8. Vanne selon une revendication quelconque parmi les revendications susmentionnées, **caractérisée en ce qu'**un passage radial (57) communiquant avec ladite chambre inférieure (52) qui porte à un disque cassable (95) placé dans un logement (93) du corps de la vanne (3) en mesure de recevoir un actionneur manuel ou pneumatique (120) conçu pour être relié à une vanne solénoïde (110) et pourvu de dispositifs de rupture pour casser ledit disque cassable (95), est prévu.

9. Vanne selon une revendication quelconque parmi les revendications susmentionnées, **caractérisée en ce qu'**un passage radial (58) communiquant avec ladite chambre inférieure (52) relié à un dispositif de sécurité (9) qui permet au fluide sous pression de sortir de ladite chambre inférieure (52) quand la pression du fluide dans ladite chambre inférieure (52) dépasse une valeur de pression prédéfinie, est prévu.

10. Vanne selon la revendication 9, **caractérisée en ce que** le dispositif de sécurité (9) comprend un disque cassable (91) qui sépare ledit premier passage radial (58) du passage (92) communiquant avec l'extérieur, ledit disque cassable se cassant quand la pression du fluide dans le premier passage radial (58) dépasse ladite valeur de seuil prédéfinie.
